# EUROPÄISCHE PATENTANMELDUNG

(11) **EP 2 700 466 A2**
(43) Veröffentlichungstag der Anmeldung: **26.02.2014**
(21) Anmeldenummer: 13003643.7
(22) Anmeldetag: 19.07.2013
(51) Int. Cl.: B23F 23/12

(54) **Werkzeuganordnung**

(30) Priorität: 20.08.2012 DE 102012016514; 17.09.2012 DE 102012018358
(71) Anmelder: LIEBHERR-VERZAHNTECHNIK GmbH, 87437 Kempten (DE)
(72) Erfinder: Plessing, Matthias, 87437 Kempten (DE)
(74) Vertreter: Laufhütte, Dieter

(57) **Zusammenfassung**

Die Erfindung betrifft eine Werkzeuganordnung für ein Rotationsbearbeitungswerkzeug, beispielsweise eine Schleifscheibe, mit einer in einem Gehäuse über einen Lagersatz drehbar aufgenommenen Spindel, auf die eine einen Werkzeugdorn umfassende Werkzeugaufnahme zum Befestigen des Werkzeugs spannbar ist. Erfindungsgemäß ist die Werkzeugaufnahme mit dem Werkzeug derart auf die Spindel spannbar, dass das wenigstens eine vordere Lager des Lagersatzes sowie die Satzmitte des Lagersatzes von dem Werkzeugdorn und/oder dem Werkzeug umschlossen sind.

## Beschreibung

Die vorliegende Erfindung betrifft eine Werkzeuganordnung nach dem Oberbegriff des Anspruch 1 sowie eine Bearbeitungsmaschine mit einer derartigen Werkzeuganordnung.

Werkzeuganordnungen für Rotationsbearbeitungswerkzeuge, wie Wälz- und Profilschleifmaschinen, zum Befestigen eines Werkzeugs, insbesondere einer Schleifscheibe, sind aus dem Stand der Technik bekannt. Bei diesen Wälz- und Profilschleifmaschinen liegt eine Schwierigkeit darin, daß durch die auftretenden Bearbeitungskräfte Verformungen an der Werkzeugaufnahme entstehen die auf andere Maschinenteile und auf das Gehäuse der Maschinen übertragen werden.

Herkömmlich wird das Werkzeug auf einen Dorn gespannt, welcher wiederum über eine Steilkegelform auf die Werkzeugspindel aufgesetzt, verspannt und darüber angetrieben wird. Dabei treten Unwuchten und bei langen Aufbauten auch Taumeleffekte auf. Gleichzeitig nimmt die Steifigkeit mit der Länge der Anordnung ab.

Um die oben ausgeführten unerwünschten Effekte auszugleichen, benötigt man bei zunehmender Breite der Werkzeuge eine Gegenlagerung. Auf eine Gegenlagerung kann bei schmaleren Werkzeugen verzichtet werden, da in der Regel der Werkzeugdorn und die Spindelwelle einteilig ausgeführt werden und das Werkzeug nahe an der Spindellagerung angeordnet ist.

Die Spindel wird in der Regel durch einen integrierten Motor oder durch einen Riemen angetrieben. Die Lager, beispielsweise Hochgenauigkeitskugellager, müssen so ausgeführt sein, daß eine genügende Steifigkeit der Verbindung, insbesondere auch bei hohen Drehzahlen, ermöglicht werden kann. Die dazu benötigten Lager werden zumeist als Wälzlager ausgeführt und sind in unterschiedlichen Ausführungsformen erhältlich, wie z. B. einreihige Universallager. Um die Steifigkeiten zu erhöhen, werden die Lager unterschiedlich angeordnet bzw. gepaart und vorgespannt, beispielsweise in O-Anordnung, in X-Anordnung, in Tandem -O- oder Tandem - X - Anordnung. Bei einem Spindelaufbau variiert die Anordnung der Lager sehr stark und hängt von den jeweiligen Bedingungen des Einsatzes ab.

Die Aufnahme des Werkzeuges auf die Spindel erfolgt in der Regel mittels eines Werkzeugdorns. Der Werkzeugdorn wird häufig mittels eines Hohlschaftkegels und einer Spannpatrone mit der Spindel verspannt. In der Regel sitzt der Hohlschaftkegel in der Werkzeugaufnahme, und die Hohlschaftkegelaufnahme inklusive Spannpatrone in der Spindel.

Aufgabe der vorliegenden Erfindung ist es, eine Werkzeuganordnung für ein Rotationsbearbeitungswerkzeug bereit zu stellen, durch welche einerseits eine stabile und steife Anordnung des Werkzeugs realisiert werden kann und andererseits, ein schneller, flexibler und komfortabler Werkzeugtausch ermöglicht wird.

Diese Aufgabe wird erfindungsgemäß durch eine Werkzeuganordnung mit den Merkmalen des Anspruchs 1 sowie durch eine Bearbeitungsmaschine mit den Merkmalen des Anspruchs 10 gelöst.

Die erfindungsgemäße Werkzeuganordnung für ein Rotationsbearbeitungswerkzeug, insbesondere für eine Hart-Fein-Verzahnungsbearbeitungmaschine zur Verzahnungsbearbeitung, weist eine in einem Gehäuse über einen Lagersatz drehbar aufgenommene Spindel auf, auf die eine einen Werkzeugdorn umfassende Werkzeugaufnahme, zum Befestigen des Werkzeugs spannbar ist. Nach der erfindungsgemäßen Lösung wird die Werkzeugaufnahme mit dem aufgespannten Werkzeug auf der Spindel so befestigt, daß das wenigstens eine vordere Lager des Lagersatzes sowie die Satzmitte des Lagersatzes vom Werkzeugdorn und / oder vom Werkzeug umschlossen sind. Dabei ist der Lagersatz bestehend aus wenigstens einem Lagerpaar nahezu vollständig unter dem Werkzeugdorn und / oder dem Werkzeug angeordnet. Somit wird eine hohe Steifigkeit erreicht, so daß auch bei breiteren Werkzeugen auf eine Gegenhalterung verzichtet werden kann.

Die erfindungsgemäße Anordnung der Spindellager unter dem Werkzeug führt zu einem kompakteren und verkürzten Aufbau der Werkzeuganordnung, wodurch eine Bearbeitung von komplizierteren Werkstücken ermöglicht wird und Störkonturen reduziert werden. Weiterhin wird durch die fliegende Lagerung auch breiterer Werkzeuge eine erhebliche Kostenreduktion gegenüber herkömmlichen Anordnungen mit Gegenlager erreicht.

Vorzugsweise wird die Spindel der erfindungsgemäßen Werkzeuganordnung im Gehäuse mittels wenigstens einem Lagerpaar gelagert, wobei besonders bevorzugt wenigstens ein vorderes Lager des Lagerpaares vom Lagersatz komplett unter dem Werkzeugdorn und/ oder unter dem Werkzeug angeordnet ist. Dabei sind die Lager der Spindellagerung auf ihrer horizontalen Flucht in allen Lagen denkbar.

Der Lagersatz, bestehend aus wenigstens einem Lagerpaar, kann vorzugsweise aus Wälzlagern, insbesondere aus Spindellagern, bestehen. Es sind aber im Rahmen der Erfindung grundsätzlich alle aus dem Stand der Technik bekannten Möglichkeiten der Lageranordnungen denkbar und möglich.

Der Lagersatz kann beispielsweise auch aus Magnetlagern, hydrodynamischen Lagerungen, hydrostatischen Lagerungen, aerostatischen Lagerungen oder aerodynamischen Lagerungen bestehen.

Es wird als besonders bevorzugt angesehen, wenn die Werkzeugaufnahme der erfindungsgemäßen Werkzeuganordnung einen Werkzeugdorn, eine Spannpatrone, insbesondere eine Hohlschaftkegel-Spannpatrone sowie einen Spanndeckel aufweist. Dabei wird der Werkzeugdorn derart ausgebildet, daß er mit der Spindel lösbar verbindbar ist und eine Aufnahme für das Werkzeug aufweist, so daß das Werkzeug auf dem Werkzeugdorn aufgezogen werden kann. Der Spanndeckel wird dazu verwendet, das Werkzeug auf dem Werkzeugdorn zu fixieren.,

Vorzugsweise kann die Hohlschaftkegel-Spannpatrone Bestandteil der Werkzeugaufnahme sein und zwischen der Spindel und dem Werkzeugdorn angeordnet sein. Alternativ kann die Spannpatrone Bestandteil der Spindel sein. Die Hohlschaftkegel-Spannpatrone sowie die Hohlschaftkegelaufnahme sind im Dorn angeordnet, der Hohlschaftkegel in der Spindel. Die Hohlschaftkegel-Spannpatrone wird manuell axial betätigt, um den Werkzeugdorn auf die Spindel zu spannen. Eine invertierte automatische Hohlschaftkegel-Spannpatrone sowie eine Kurzkegelaufnahme mit Schrauben und eine zylindrische Aufnahme mit Schrauben oder eine Steilkegelaufnahme sind ebenfalls möglich und leicht realisierbar. Durch all diese Konstruktionen wird eine hohe Steifigkeit ohne eine Gegenlagerung erreicht. Ein schneller und einfacher Werkzeugwechsel kann so durch den Wechsel des Werkzeugdorns inklusive aufgespanntem Werkzeug realisiert werden.

Die Spindel wird vorzugsweise derart ausgebildet, daß sie einen Hohlschaftkegel oder alternativ eine Hohlschaftkegelaufnahme aufweist.

Eine besonders vorteilhafte Ausführungsform der erfindungsgemäßen Werkzeuganordnung sieht vor, daß ein Wuchtelement (auch Wuchtkopf genannt), das zum Ausgleich von Unwuchten bei der Rotation der Werkzeuganordnung dient, zumindest nahezu vollständig in der Spindel aufgenommen wird, so daß das Wuchtelement von dem Werkzeug umgeben wird. Durch diese Lösung wird erreicht, daß bei wechselnden Werkzeugen und mehreren Werkzeugdornen nur ein Wuchtelement benötigt wird,. Hier findet ein automatisches Wuchten statt.

Zusätzlich zu dem integrierten Wuchtelement können ein bzw. zwei manuelle Auswuchtringe beidseitig an der Schleifscheibe angeordnet werden.

Es ist aber auch denkbar, dass das in der Spindel integrierte Wuchtelement als Ring ausgebildet wird und dadurch die Hohlschaftkegelspannpatrone in dem freiwerdenden Raum in gängiger Ausführung angeordnet wird.

Die oben gestellte erfindungsgemäße Aufgabe wird auch durch eine Hart-Fein-Verzahnungsbearbeitungsmaschine und insbesondere eine Wälz- und Profilschleifmaschine mit den Merkmalen des Anspruchs 10 gelöst.

Die vorliegende Erfindung wird nun anhand von in der Zeichnung dargestellten Ausführungsbeispielen näher erläutert. Es zeigen:
- Figur 1:: eine vereinfachte schematische Darstellung einer Wälz- und Profilschleifmaschine nach dem Stand der Technik,
- Figur 2:: eine teilweise Schnittdarstellung einer erfindungsgemäßen Werkzeuganordnung einer Wälz- und Profilschleifmaschine gemäß einem bevorzugten Ausführungsbeispiel und
- Figur 3:: eine Darstellung entsprechend Figur 2 eines anderen bevorzugten Ausführungsbeispiels.

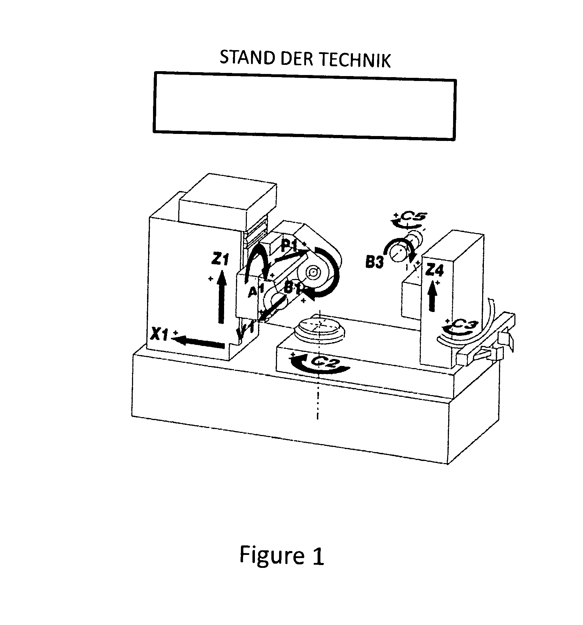

Figur 1 zeigt eine vereinfachte schematische Darstellung einer Wälz- und Profilschleifmaschine nach dem Stand der Technik. Diese Maschine ist bekannten Aufbaus und wird daher im Einzelnen nicht erläutert. In der schematischen perspektivischen Darstellung der Wälz- und Profilschleifmaschine für Wälz- oder Profilbearbeitung sind die unterschiedlichen Bewegungsrichtungen gezeigt. Der Darstellung sind die sechs Standardachsen dieser Maschine zu entnehmen, welche sich in die drei Linearachsen X1, Z1, V1 sowie die drei Rotationsachsen A1, B1 und C2 einteilen lassen. Die Rotationsachse A1 dient zum Einschwenken des Werkzeugs, die Rotationsachse B1 ist für die Drehbewegung des verwendeten Werkzeugs zuständig und die Rotationsachse C2 bezeichnet die Drehbewegung des hier nicht dargestellten zu bearbeitenden Werkstückes, welches sich auf dem Werkzeugtisch befindet. Die drei Linearachsen X1, Z1 und V1 dienen zur Radialbewegung jeweils des Werkzeugs (X1) zur Vorschubbewegung des Werkzeugs (Z1) sowie zur Tangentialbewegung des Werkzeugs (V1).

Die Schnittgeschwindigkeit, mit der ein eingespanntes Werkstück auf dem Werkstücktisch bearbeitet wird, läßt sich durch die Drehzahl um die Rotationsachse B1 bestimmen. Die Drehzahl des Werkzeugs um die Drehachse B1 wird moduliert, in dem ihr eine modulierende Zusatzbewegung überlagert wird. Die entsprechende Ansteuerung der Linear- und Rotationsachsen der Maschine wird durch eine bekannte CNC-Steuerung übernommen. Die C5-Achse zeigt das Schwenken der Abrichtspindel und die C3-Achse, die Ringladerdrehung. Die Gegenhalterarmbewegung wird durch die Z4-Achse gekennzeichnet und die B3 ist die Werkzeugachse.

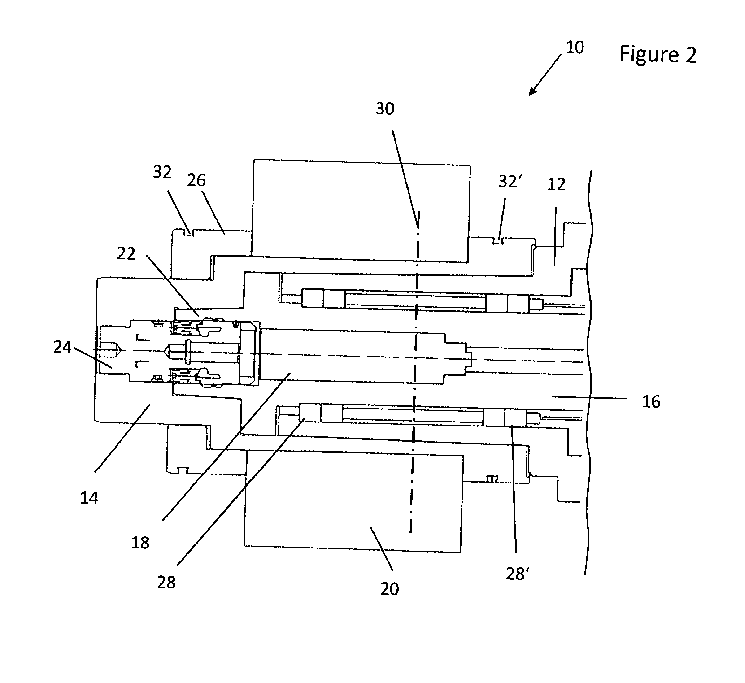

Figur 2 zeigt eine teilweise Schnittdarstellung einer erfindungsgemäßen Werkzeuganordnung 10 im Bereich der Werkzeugaufnahme. Die Werkzeuganordnung 10 weist ein Gehäuse 12 auf, welches mit einem Werkzeugdorn 14 in Verbindung steht und in welchem eine Spindel 16 angebracht ist. Zwischen dem Gehäuse 12 und der Spindel 16 ist der Lagersatz 28 und 28' angeordnet. Der Lagersatz 28, 28' weist in diesem Ausführungsbeispiel zwei Lagerpaare auf, welche im Gehäuse 12 auf der Spindel 16 angebracht sind, wobei die vorderen Lager des Lagersatzes28 sowie die Satzmitte (30) des Lagersatzes innerhalb des Spindelgehäuses 12 und gleichzeitig innerhalb des Werkzeugdorns 14 angeordnet sind

Die hinteren Lager des Lagersatzes 28' sind von den vorderen Lagern des Lagersatzes 28 in axialer Richtung beabstandet. Der Lagersatz 28, 28' ist in diesem Ausführungsbeispiel als Wälzlagerung ausgebildet, wobei auch andere Ausführungen möglich sind. Generell sind die Lager auf ihrer horizontalen Flucht in allen Lagen denkbar.

Eine Werkzeugaufnahme ist in diesem Ausführungsbeispiel invertiert angeordnet. Ein Wuchtelement 18 ist dabei in der Spindel16 vollständig integriert, wobei eine Hohlschaft-Kegel-Spannpatrone 24 invertiert eingesetzt ist, d. h. der Hohlschaftkegel 22 sitzt in der Spindel 16 und die Hohlschaftkegelaufnahme in der Werkzeugaufnahme (14, 24, 26). Die Spindel 16 weist dabei an seinem der Hohlschaft-Kegel-Spannpatrone 24 angrenzenden Ende einen Hohlschaftkegel 22 auf, so daß die Hohlschaft-Kegel-Spannpatrone 24 im Hohlschaftkegel 22 aufnehmbar ist. Durch diese Ausbildung kann die Hohlschaftkegel-Spannpatrone 24 manuell axial betätigt und gespannt werden. Eine invertierte automatische Hohlschaftkegel-Spannpatrone ist hier ebenfalls denkbar und realisierbar.

Des Weiteren kann auch eine Kurzkegelaufnahme mit Schrauben, eine zylindrische Aufnahme mit Schrauben oder eine Steilkegelaufnahme eingesetzt werden.

Die Werkzeuganordnung weist weiterhin einen Spanndeckel 26 auf, welcher auf dem Werkzeugdorn 14 derart aufgesetzt werden kann, daß die in diesem Ausführungsbeispiel als Werkzeug dienende Schleifscheibe 20 in der im Werkzeugdorn 14 vorgesehenen Aufnahme befestigt werden kann. Der Spanndeckel 26 wird dabei mit dem Werkzeugdorn 14 mittels Schrauben befestigt. Ein schneller und einfacher Werkzeugwechsel kann so durch den Wechsel des Werkzeugdorns 14 inklusive des aufgespanntem Werkzeugs 20realisiert werden

Durch die erfindungsgemäße Werkzeugaufnahme wird eine hohe Steifigkeit für breitere Werkzeuge auch ohne Gegenlagerung erreicht. Der Lagersatz 28, 28' wie auch die besondere Anordnung des Wuchtelementes 18 im Inneren der Spindelwelle 16 tragen zudem zu einem kompakteren Aufbau, sowie zu einer Kostenreduktion gegenüber herkömmlichen Anordnungen bei. Ein schneller Werkzeugwechsel kann auf eine einfache Weise und komfortabel mittels Anziehen einer einzigen Schraube in der Spannpatrone vorgenommen werden.

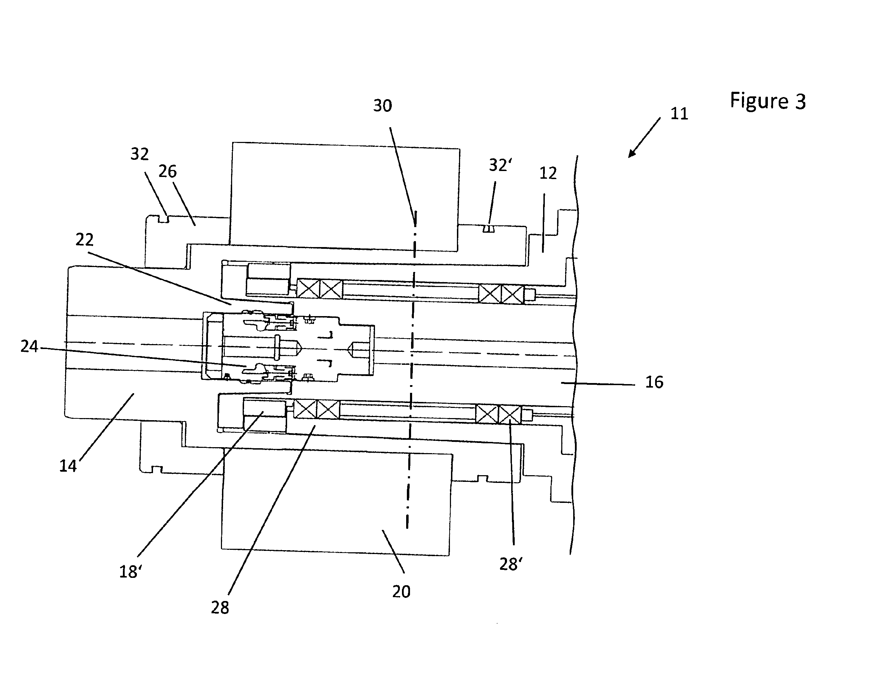

Zusätzlich zu einem integrierten Wuchtelement können manuelle Auswuchtringe 32, 32' ,orgesehen werden, welche beidseitig an der Schleifscheibe 20 angeordnet werden können. Dies ist in den Ausführungsformen gemäß Figur 2 und 3 gezeigt. In Figure 3 jedoch tritt der auf dem Umfang der Spindel 16 angeordnete Auswuchtring 18' an die Stelle des in Figur 2 in der Spindel integrierten Wuchtelementes 18. Im übrigen ist hier auch eine Ausgestaltung des Werkzeugdorns 14 gezeigt, die sich von derjenigen gemäß Figur 2 unterscheidet. Näheres hierzu kann der Figur 3 unmittelbar entnommen werden.

## Patentansprüche

1. Werkzeuganordnung für ein Rotationsbearbeitungswerkzeug, insbesondere für eine Hart-Fein-Verzahnungsbearbeitungsmaschine zur Verzahnungsbearbeitung mit einer in einem Gehäuse (12) über einen Lagersatz 28, 28') drehbar aufgenommenen Spindel (16), auf die eine einen Werkzeugdorn (14) umfassende Werkzeugaufnahme (14, 24, 26) zum Befestigen des Werkzeugs (20) spannbar ist,
**dadurch gekennzeichnet,**
**daß** die Werkzeugaufnahme (14,24, 26) mit dem Werkzeug (20) derart auf die Spindel (16) spannbar ist, daß das wenigstens eine vordere Lager des Lagersatzes (28, 28') sowie die Satzmitte (30) des Lagersatzes vom Werkzeugdorn (14) und / oder vom Werkzeug (20) umschlossen sind.

2. Werkzeuganordnung nach Anspruch 1, **dadurch gekennzeichnet, daß** die Spindel (16) im Gehäuse (12) mit einem Lagersatz (28,28'), bestehend aus wenigstens einem Lagerpaar, gelagert ist.

3. Werkzeuganordnung nach Anspruch 1 oder 2, **dadurch gekennzeichnet, daß** der Lagersatz (28, 28'), bestehend aus wenigstens einem Lagerpaar, als Wälzlagerung, insbesondere einer mit Spindellagern, ausgeführt ist.

4. Werkzeuganordnung nach Anspruch 1 oder 2, **dadurch gekennzeichnet, daß** der Lagersatz (28, 28'), bestehend aus wenigstens einem Lagerpaar, ,aus Magnetlagern , hydrodynamischen Lagerungen, hydrostatischen Lagerungen, aerostatischen Lagerungen oder aerodynamischen Lagerungen besteht.

5. Werkzeuganordnung nach einem der vorhergehenden Ansprüche, **dadurch gekennzeichnet, daß** die Werkzeugaufnahme (14, 24, 26) aus einem Werkzeugdorn (14), einer Spannpatrone (24), insbesondere einer Hohlschaftkegel-Spannpatrone, sowie einem Spanndeckel (26) besteht, wobei der Werkzeugdorn (14) derart ausgebildet ist, daß er über die Spannpatrone (24) mit der Spindel (16,) lösbar verbindbar ist und eine Aufnahme für das Werkzeug (20) aufweist.

6. Werkzeuganordnung nach einem der vorhergehenden Ansprüche, **dadurch gekennzeichnet, daß** die Spannpatrone (24) Bestandteil der Werkzeugaufnahme ist und zwischen der Spindel (16) und dem Werkzeugdorn (14) angeordnet ist, oder daß alternativ die Spannpatrone (24) Bestandteil der Spindel (12,16,28,28') ist.

7. Werkzeuganordnung nach einem der vorhergehenden Ansprüche, insbesondere nach Anspruch 5, **dadurch gekennzeichnet, daß** die Spindel (16) an ihrem freien Ende einen Hohlschaftkegel (22) oder alternativ eine Hohlschaftkegelaufnahme aufweist

8. Werkzeuganordnung nach einem der vorhergehenden Ansprüche, **dadurch gekennzeichnet, daß** ein Wuchtelement (18) weitgehend in der Spindel (16) aufnehmbar ist, so daß das Wuchtelement (18) von dem Werkzeug (20) umgeben ist.

9. Werkzeuganordnung nach einem der Ansprüche 1 bis 7, **dadurch gekennzeichnet, daß** ein Auswuchtring (18') auf der Spindel (16) aufgesetzt ist.

10. Bearbeitungsmaschine, insbesondere eine Wälz- und Profilschleifmaschine, mit einer Werkzeuganordnung nach einem der Ansprüche 1 bis 9.
